# EUROPEAN PATENT SPECIFICATION

(11) **EP 1 635 079 B1**
(45) Date of publication and mention of the grant of the patent: **02.05.2012**
(21) Application number: 04745469.9
(22) Date of filing: 01.06.2004
(51) Int. Cl.: F16C 25/08, F16C 19/18, F16C 19/52

(54) **BEARING DEVICE FOR WHEEL**
LAGERVORRICHTUNG FÜR RAD
DISPOSITIF A PALIER POUR ROUE

(30) Priority: 03.06.2003 JP 2003157558; 15.03.2004 JP 2004072222
(43) Date of publication of application: 15.03.2006
(73) Proprietor: NTN Corporation, Osaka-shi, Osaka 550-0003 (JP)
(72) Inventor: OKADA, Koichi, c/o NTN Corporation, Iwata-shi, Shizuoka 438-8510 (JP); HAYASHI, Yutaka, c/o NTN Corporation, Iwata-shi, Shizuoka 438-8510 (JP); IWAMOTO, Kenichi, c/o NTN Corporation, Iwata-shi, Shizuoka 438-8510 (JP); KOIKE, Takashi, c/o NTN Corporation, Iwata-shi, Shizuoka 438-8510 (JP)
(74) Representative: Thielmann, Andreas
(86) International application number: PCT/JP2004/007504
(87) International publication number: WO 2004/109133

(56) References cited:
- DE-A1- 10 060 638
- GB-A- 1 535 163
- JP-A- 1 087 916
- JP-A- 3 121 308
- JP-A- 3 265 711
- JP-A- 5 026 235
- JP-A- 5 079 514
- JP-A- 5 288 217
- JP-A- 11 223 216
- JP-A- 2002 339 964
- US-A- 4 676 667

## Description

### BACKGROUND OF THE INVENTION

### Field of the Invention

The present invention relates to a bearing apparatus for a wheel of vehicle for rotatably supporting the wheel of vehicle such as an automobile, and more particularly to a bearing apparatus for a wheel of vehicle having a preload varying means built in the bearing apparatus for variably setting an optimum preload suitable for the running condition of vehicle.

### Description of Background Art

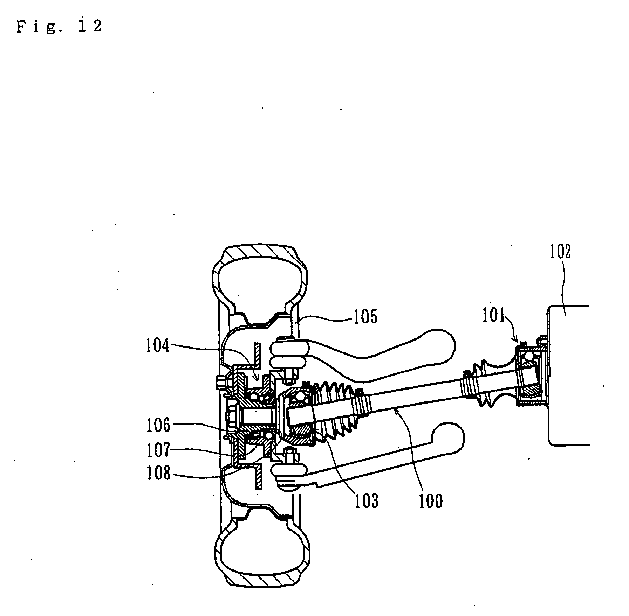

The power transmitting apparatus for transmitting an engine power to wheels is required not only to allow power transmission from an engine to wheels, but to allow radial and axial displacement from wheels as well as momentum displacement caused by bounds of body of vehicle during running on a rough road and cornering of vehicle. Accordingly, as shown in Fig. 12, one end of a driving shaft 100 arranged between an engine and a driving wheel is connected to a differential apparatus 102 via a sliding type constant velocity universal joint 101 and the other end thereof is connected to a wheel 105 via a bearing apparatus for a wheel 104 including a stationary type constant velocity universal joint 103.

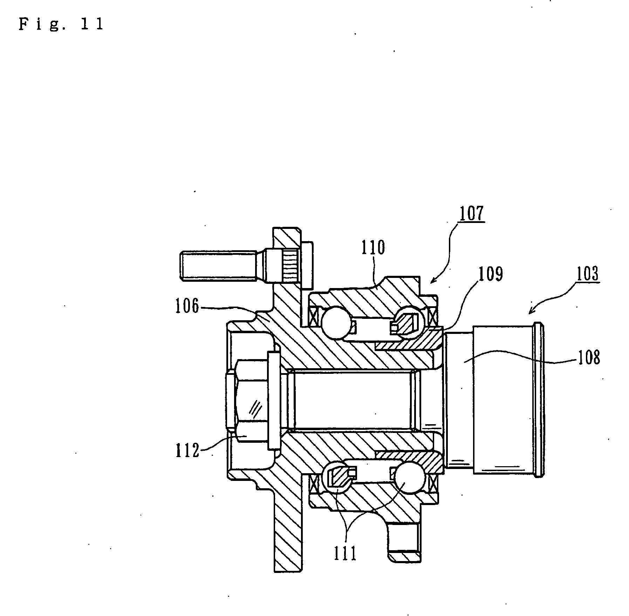

As shown in Fig. 11, this bearing apparatus for a wheel of vehicle 104 comprises a hub wheel 16 on which a wheel 105 is mounted at one end thereof, a double row rolling bearing 107 rotatably supporting the hub wheel 106, and an outer joint member 108 of the stationary type constant velocity universal joint 103 for transmitting the power of the driving shaft 100 to the hub wheel 106. The double row rolling bearing 107 comprises an outer member 110, a separate inner ring 109 press fitted on the outer periphery of the hub wheel 106, and a double row rolling elements 111 rollably contained between the hub wheel 106/the inner ring 109 and the outer member 110.

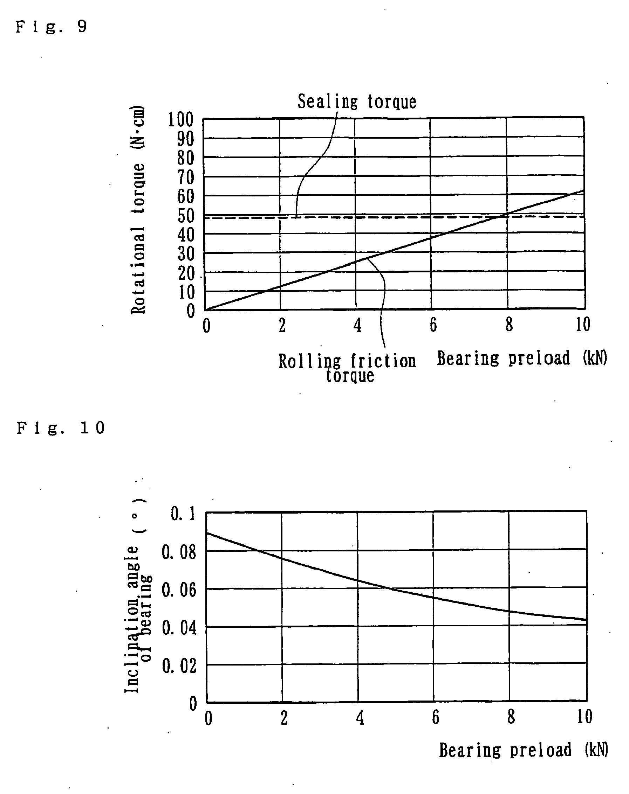

In such a bearing apparatus for a wheel of vehicle 104, it has been carried out to apply a predetermined preload to the bearing apparatus in order to assure a desired bearing rigidity. The control of the bearing preload has been carried out by precisely finishing the abutting surfaces between the hub wheel 106 and the inner ring 109 as well as by tightly connecting the hub wheel 106 and the outer joint member 108 by fastening a securing nut 112 with a predetermined torque (axial force). Of course the bearing preload influences not only the bearing life, but the environmental problems such as safety driving and an improvement of fuel consumption etc. That is, as shown in Fig. 9, since the rotational torque is proportional to the bearing preload, it is possible to contribute to the improvement of fuel consumption by reducing the preload to reduce the rotational torque. On the contrary, since the inclination angle of bearing essential factor for determining the rigidity of bearing is inverse proportion to the bearing preload, as shown in Fig. 10, the bearing rigidity can be improved by increasing the preload to reduce the inclination angle of bearing and thus the inclination of brake rotor (not shown) caused during the cornering run of vehicle can be also suppressed.

If it is possible to control the bearing preload in an optimum manner in accordance with the running condition of vehicle, it will be able to provide a bearing apparatus for a wheel of vehicle ideal in the safety drive and improvement in fuel consumption. A bearing device that features variable preload depending on the centrifugal force applied to the bearing device is known from JP 2002-339964 A. JP 2002-339964 A discloses a bearing apparatus for a wheel of vehicle, said bearing apparatus comprising a hub wheel integrally formed therewith a wheel mounting flange on the periphery at one end thereof, and a double row rolling bearing, the double row rolling bearing comprising an outer member integrally formed therewith a body mounting flange on the periphery thereof and also formed therewith double row outer raceway surfaces, an inner member including said hub wheel and formed therewith double row inner raceway surfaces each arranged opposite to each of said double row outer surfaces, and double row rolling elements freely rotatably contained between said double row outer and second raceway surfaces, said double row rolling bearing being adapted to be applied a predetermined preload, wherein there are arranged a separate inner ring on said inner member, and a preload varying means arranged at an abutting portion between said inner member and the separate inner ring for varying the preload applied to the bearing. However no bearing apparatus has been developed yet which can variably set the optimum bearing preload in accordance with the running condition of vehicle.

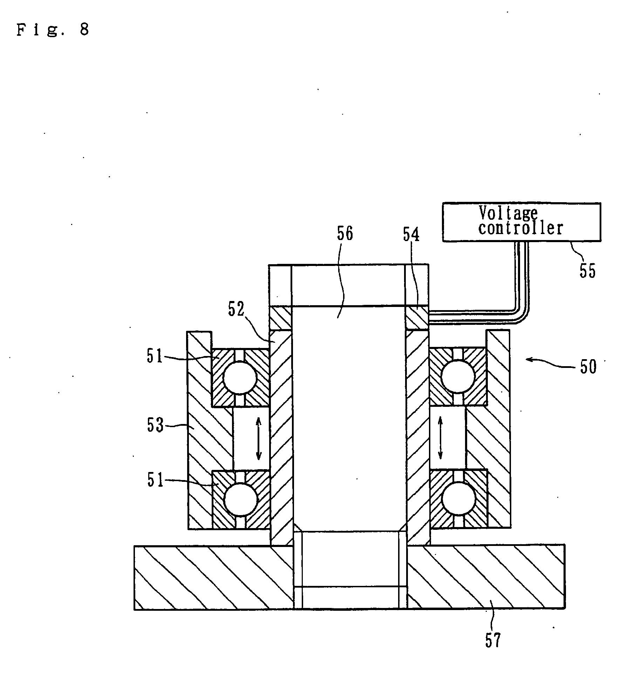

Fig. 8 shows a bearing unit 50 which can vary the bearing preload. This bearing unit comprises two rolling bearings 51 and 51, inner and outer cylindrical portions 52 and 53 for holding the rolling bearings 51 and 51, an electrostrictive element 54 arranged on one end of one of the cylindrical portions 52 and 53, and a voltage controller 55 for controlling voltage applied to electrostrivtive element 54, and the cylindrical portion 52 together with the electrostructive element 54 is secured to stationary portions 56 and 57 of the bearing unit 50. Stabilization of preloading can be obtained by automatically setting the distance between inner rings of the bearings at a predetermined value with using a temperature sensor (not shown) for detecting temperature variation of the inner cylindrical portion 52 and the stationary portion 56 and then by extending or contracting the electrostrictive element 54 with using the voltage controller 55 for controlling the voltage applied to the electrostrictive element 54 in accordance with the temperature variation (cf. Japanese Laid-open Patent Publication No. 223216/1999).

### SUMMARY OF THE INVENTION

However this bearing unit 50 is directed to that which can only suppress variation of the preload set initially of two rolling bearings 51 and 51 which would be caused by temperature variation with using the electrostrictive element 54 and thus it is different from that which intends to variably set the optimum preload in accordance with the running condition of vehicle. Accordingly it is impossible to variably set the optimum preload in accordance with the running condition of vehicle by using the bearing unit 50 of the prior art which can only suppress the preload of the bearings 51 and 51 caused by temperature variation. This is because the load applied to the bearing for a wheel of vehicle always randomly changes in accordance with the running condition of vehicle e.g. whether it runs on straight or curved roads.

It is, therefore, an object of the present invention to provide a bearing apparatus for a wheel of vehicle which can variably set the optimum preload in accordance with the running condition of vehicle.

For achieving the object of the present invention, there is provided a bearing apparatus for a wheel of vehicle according to claim 1.

According to the bearing apparatus of the present invention, since there are arranged a separate outer or inner ring on at least one of said outer and inner members, and a preload varying means arranged at an abutting portion between said outer and inner members for varying a preload applied to the bearing, said preload varying means can be extended or contracted based on an output signal from a detecting sensor for detecting the running condition of vehicle, it is possible to suppress the inclination of the brake rotor by increasing the bearing preload when the bearing rigidity is required during cornering of vehicle and thus to ensure safety driving without any irregular motion. On the contrary, when the vehicle is running on a straight road, it is possible to reduce the rotational torque and the friction loss of the bearing by reducing the bearing preload and thus to improve the fuel consumption.

The preload varying means may be any one of an electrostrictive element, a magnetostrictive element, a shape memory element, or a member having a coefficient of thermal expansion higher than that of structural parts of the bearing.

According to the present invention, it is preferable that at least one of a load sensor, a vehicle speed sensor and a temperature sensor may be incorporated in the preload varying means. This makes it possible to always obtain an optimum bearing preload by applying a predetermined voltage to the preload varying means with timely computing the preload based on real time informations for determining whether the vehicle is now on straight or cornering run.

### Effect of the Invention

The present invention is a bearing apparatus for a wheel of vehicle according to claim 1. This makes it possible to suppress the inclination of the brake rotor by increasing the bearing preload when the bearing rigidity is required during cornering of vehicle and thus to ensure safety driving without any irregular motion. On the contrary, when the vehicle is running on a straight road, it is possible to reduce the rotational torque and the friction loss of the bearing by reducing the bearing preload and thus to improve the fuel consumption.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a longitudinal section view showing a first embodiment of the bearing apparatus for a wheel of the present invention;
- Fig. 2: is a longitudinal section view showing a second embodiment of the bearing apparatus for a wheel of the present invention;
- Fig. 3: is a flow chart showing a method for controlling the preload of the bearing apparatus for a wheel of the present invention;
- Fig. 4: is a longitudinal section view showing a third embodiment of the bearing apparatus for a wheel of the present invention;
- Fig. 5: is a longitudinal section view showing a fourth embodiment of the bearing apparatus for a wheel of the present invention;
- Fig. 6: is a longitudinal section view showing a fifth embodiment of the bearing apparatus for a wheel of the present invention;
- Fig. 7: is a graph showing a wave of an output signal from the electrostrictive element of the present invention;
- Fig. 8: is a longitudinal section view showing a preload varying bearing unit of the prior art;
- Fig. 9: is a graph showing a relation between the bearing preload and the rotational torque;
- Fig. 10: is a graph showing a relation between the bearing preload and the inclination angle of the bearing;
- Fig. 11: is a longitudinal section view of the bearing apparatus for a wheel of the prior art; and
- Fig. 12: is a longitudinal section view showing an example of a power transmitting apparatus in which a bearing apparatus for a wheel of vehicle is incorporated.

### DESCRIPTION OF THE PREFERRED EMBODIMENTS

### First embodiment

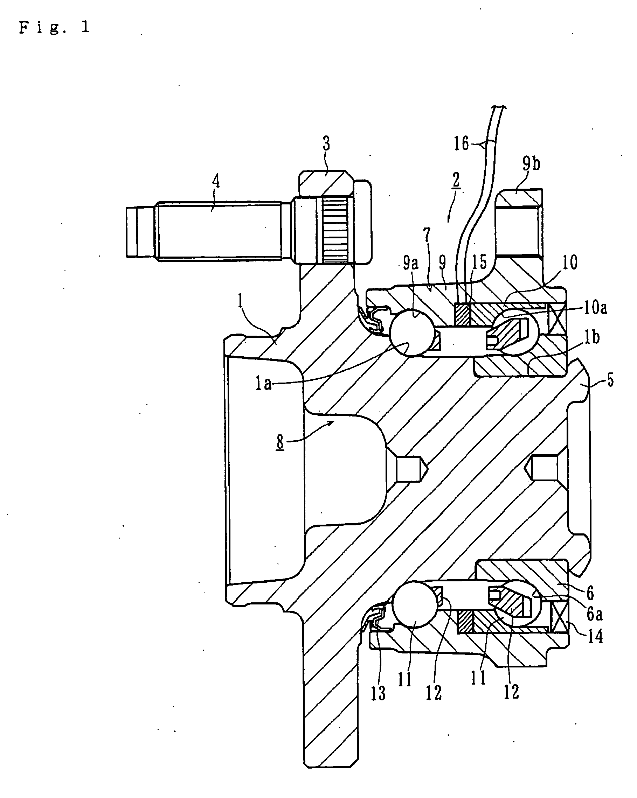

Preferred embodiments of the present invention will be described with reference to the accompanied drawings. Fig. 1 shows a first embodiment of a bearing apparatus for a wheel of vehicle of the present invention.

The bearing apparatus for a wheel of vehicle is that used for a driven wheel and comprises a hub wheel 1 and a double row rolling bearing 2. In the description below, a term "outboard side" (left hand side in drawings) of the apparatus denotes a side which is positioned outside of the vehicle body and a term "inboard side" (right hand side in drawings) of the apparatus denotes a side which is positioned inside of the body when the bearing apparatus is mounted on the vehicle body.

The hub wheel 1 is integrally formed with a wheel mounting flange 3 at an end of the outboard side, an outboard side inner racewaysurface 1a of a double row rolling bearing 2 on the outer peripheral surface thereof, and a cylindrical portion 1b axially extending from the inner raceway surface 1a. Hub bolts 4 for securing the wheel on the flange 3 are equidistantly arranged along the periphery of the flange 3. The outer peripheral surface of the hub wheel 1 is formed with a hardened layer having a surface hardness 54-64 HRC in a region from the inner raceway surface 1a to the axially extending portion 1b. The heat treatment is preferably carried out by high frequency induction hardening suitable for a local heating and for easily setting a depth of the hardened layer. An end of the axially extending portion 1b is remained as non-hardened portion less than 25 HRC for forming a caulked portion 5 plastically deformed radially outward.

A separate inner ring 6 is press fitted onto the axially extending portion 1b of the hub wheel 1 and secured thereto by the caulked portion 5. An inner raceway surface 6a of the inboard side is formed on the outer peripheral surface of the inner ring 6 and forms together with the inner raceway surface 1a double row inner raceway surfaces 1a and 6a.

The double row rolling bearing 2 comprises an outer member 7, an inner member 8 and double row rolling elements 11 and 11. The outer member 7 comprises an outer ring member 9 integrally formed on its outer peripheral surface with a body mounting flange 9b for mounting the bearing apparatus on the body (not shown) of vehicle and on its inner peripheral surface an outer raceway surface 9a, and a separate outer ring 10 press fitted into the outer ring member 9 at its inboard side and formed on its inner peripheral surface an outer raceway surface 10a. The inner member 8 denotes the hub wheel 1 and the inner ring 6. The double row rolling elements 11 and 11 are contained between the double row outer raceway surfaces 9a and 10a and the double row inner raceway surfaces 1a and 6a and rollably retained therein by cages 12 and 12. A hardened layer having a surface hardness 54-64 HRC in a region from the outer raceway surface 9a to the inboard side end is formed on the inner peripheral surface of the outer ring member 9. The heat treatment is preferably carried out by high frequency induction hardening suitable for a local heating and for easily setting a depth of the hardened layer. Seals 13 and 14 are arranged at the ends of the double row rolling bearing 2 to prevent leak of grease contained within the bearing 2 as well as ingress of rain water or dusts. The illustrated ball rolling elements 11 and 11 may be replaced for example by conical rolling elements.

There is arranged at an abutted region between the outer ring member 9 and outer ring 10 a ring shaped electrostrictive element 15 formed by laminated piezo elements etc to which a voltage control apparatus (not shown) is connected via a wire cable 16 for controlling the voltage applied to the electrostrictive element 15. In this embodiment, a predetermined voltage is applied to the electrostrictive element 15 during a cornering run of a vehicle in accordance with a steering angle and a vehicle speed etc based on output signals from a steering angle sensor and a vehicle speed sensor etc (not shown) in order to extend the electrostrictive element 15 to increase the bearing preload and to set an optimum preload. On the contrary, when the vehicle runs on a straight road, no voltage is applied to the electrostrictive element 15 and the initial preload is maintained. Accordingly, it is possible to suppress the inclination of the brake rotor (not shown) by increasing the bearing preload when the bearing rigidity is required during cornering of vehicle and thus to ensure safety driving without any irregular motion. On the contrary, when the vehicle is running on a straight road, it is possible to reduce the rotational torque and the friction loss of the bearing by reducing the bearing preload and thus to improve the fuel consumption. According to this embodiment, since the bearing preload is set at light preload so as to meet the running condition on a straight road which is very longer than run in cornering, the life of bearing can be further improved.

### Second embodiment

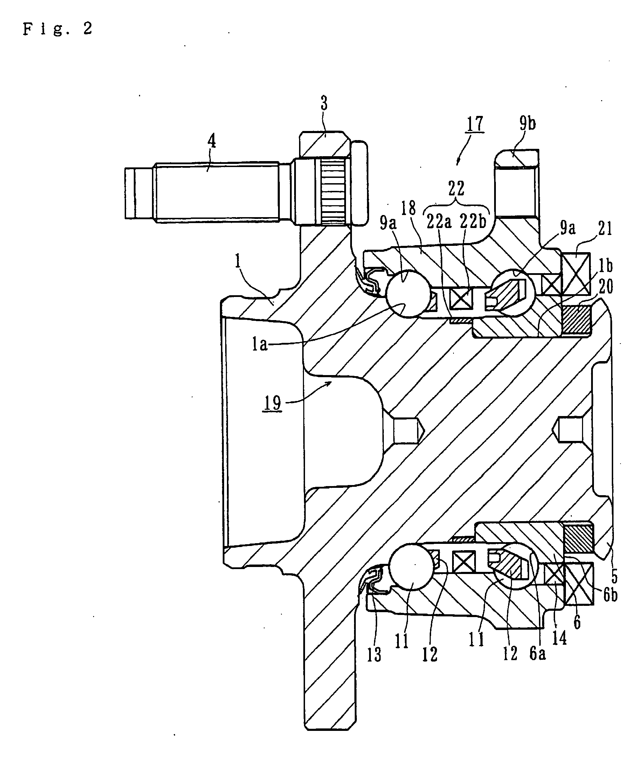

Fig. 2 is a longitudinal view showing a second embodiment of the bearing apparatus for a wheel of the present invention. Same reference numerals are used in this embodiment for designating same parts having same functions used in the first embodiment.

This bearing apparatus for a wheel of vehicle comprises the hub wheel 1 and a double row rolling bearing 17 and this double row rolling bearing 17 comprises an outer member 18, an inner member 19 and the double row rolling elements 11 and 11. The outer member 18 is integrally formed on its outer peripheral surface with a body mounting flange 9b for mounting the bearing apparatus on the body (not shown) of vehicle and on its inner peripheral surface double row outer raceway surfaces 9a and 9a.

A separate inner ring 6 is press fitted onto the axially extending portion 1b of the hub wheel 1 and secured thereto by the caulked portion 5. The double row rolling elements 11 and 11 are contained between the double row outer raceway surfaces 9a and 9a and the double row inner raceway surfaces 1a and 6a and rollably retained therein by cages 12 and 12. A hardened layer having a surface hardness 54-64 HRC in a region from the outer raceway surface 9a to the press fitted portion of seals 13 and 14 is formed on the inner peripheral surface of the outer member 18. The heat treatment is preferably carried out by high frequency induction hardening suitable for a local heating and for easily setting a depth of the hardened layer.

A ring shaped magnetostrictive element 20 is interposed between an end 6b of the inner ring 6 and the caulked portion 5. On the other hand, an electromagnetic coil 21 is mounted on the inboard side end face of the outer member 18 oppositely to the magnetostrictive element 20. The magnetostrictive element 20 extends and increases the preload when the magnetic field is applied to the magnetostrictive element 20 by the electromagnetic coil 21. Herein, the inner member 19 denotes the hub wheel 1, the inner ring 6 and the magnetostrictive element 20.

According to the present embodiment, a load sensor 22 is arranged between the outer member 18 and the hub wheel 1. The load sensor 22 comprises a portion to be detected (i.e. detected portion) 22a made of magnetostrictive material such as Fe-Al alloy and mounted on the hub wheel 1 and a detecting coil 22b mounted on the outer member 18. The load sensor 22 can detect a variation of magnetostriction caused by increase and decrease of load applied to the apparatus as variation of magnetic resistance detected by the detecting coil 22b. Accordingly, when a large load such as a momentum load is applied to the apparatus during cornering run on a curved road, a predetermined magnetic field is applied to the magnetostrictive element 20 by the electromagnetic coil 21 in accordance with the load and thus the magnetostrictive element 20 is extended to increase the bearing preload and to set an optimum preload. On the contrary, when a vehicle runs on a straight road, no magnetic field is applied to the magnetostrictive element 20 and thus the initial preload is maintained. Accordingly, it is possible to suppress the inclination of the brake rotor by increasing the bearing preload when the bearing rigidity is required during cornering run of vehicle and thus to ensure safety driving without any irregular motion. On the contrary, when the vehicle is running on a straight road, it is possible to reduce the rotational torque and the friction loss of the bearing by reducing the bearing preload and thus to improve the fuel consumption.

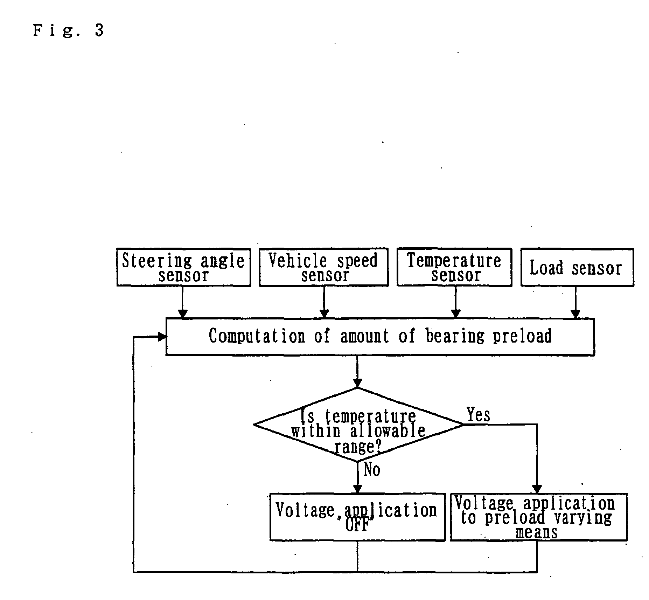

Then a method for controlling the preload will be described with reference to a flow chart shown in Fig. 3. As previously described, the bearing apparatus of the present invention is provided with the preload varying means including the electrostrictive element 15 or magnetostrictive element 20 and electromagnetic coil 21, the load sensor 22, the vehicle speed sensor, temperature sensor etc for detecting the running condition of vehicle. Obtaining various real time informations as to the steering angle, the vehicle speed and the load acting on the bearing, a predetermined voltage is applied to the preload varying means so as to achieve a desired optimum preload by momentarily computing during travel of vehicle. During which, the voltage application is made "OFF" when the output of the temperature sensor mounted within the bearing exceeds a threshold in order to stop the preload varying function. Thus, it is possible to previously prevent any trouble which would be otherwise caused by abnormal temperature rise and thus to ensure the safety of vehicle.

Although the preload varying means comprising the electrostrictive element 15 and that comprising the magnetostrictive element 20 and the electromagnetic coil 21 are illustrated as preferable embodiments, it is possible for example to use shape memory alloy in stead of them. In this case, if setting two conditions of the shape memory at higher or lower than the transformation point, two axial lengths condition of the shape memory alloy can be obtained. Thus it is possible to extend the shape memory alloy in the cornering travel condition of vehicle and not to extend it in the straight travel condition of vehicle. It is possible to use either a contact method or a non-contact method via electric power supply to a electromagnetic coil as a heating means for the shape memory alloy. In addition it is also possible to use aluminum alloy or plastics having a high coefficient of thermal expansion in place of shape memory alloy. Furthermore, the output signals of the steering angle sensor, the load sensor etc may be transmitted outside via a wireless manner.

### Third embodiment

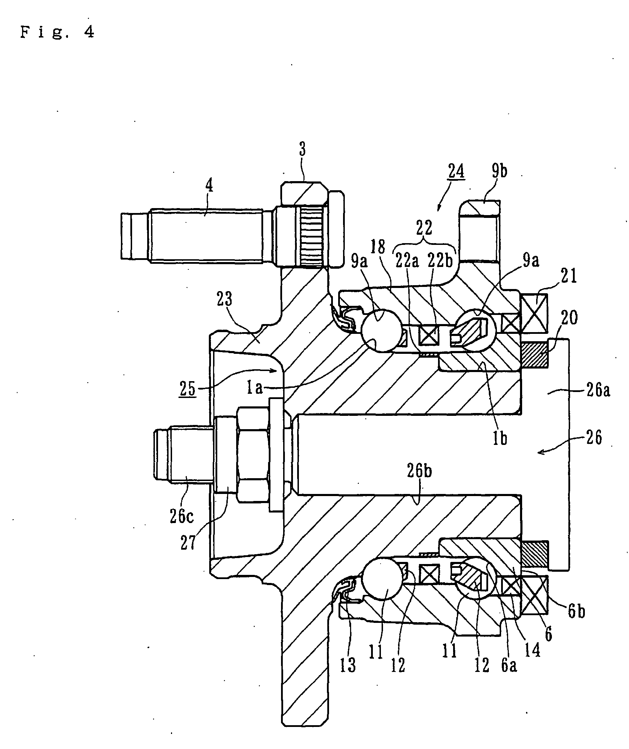

Fig. 4 is a longitudinal view showing a third embodiment of the bearing apparatus for a wheel of the present invention. Same reference numerals are used in this embodiment for designating same parts having same functions used in the second embodiment since this embodiment is different from the second embodiment only in its preload applying structure.

This bearing apparatus for a wheel of vehicle comprises a hub wheel 23 and a double row rolling bearing 24 and this double row rolling bearing 24 comprises an outer member 18, an inner member 25 and the double row rolling elements 11 and 11. The outer member 18 is integrally formed on its outer peripheral surface with a body mounting flange 9b for mounting the bearing apparatus on the body (not shown) of vehicle and on its inner peripheral surface double row outer raceway surfaces 9a and 9a. A separate inner ring 6 is press fitted onto the axially extending portion 1b of the hub wheel 23. The double row rolling elements 11 and 11 are contained between the double row outer raceway surfaces 9a and 9a and the double row inner raceway surfaces 1a and 6a and rollably retained therein by cages 12 and 12.

The hub wheel 23 is formed as having a hollow structure and a securing member 26 is inserted into a central bore of the hub wheel 23. The securing member 26 has a flangeportion 26a at its one end and a shaft portion 26b on which a male thread 26c is formed. A ring shaped magnetostrictive element 20 is interposed between the end of larger diameter of the inner ring 6 and the flange portion 26a. The inner ring 6 is axially immovably secured relative to the hub wheel 24 by fastening a nut 27 on the male thread 26c at a predetermined fastening torque. On the contrary, an electromagnetic coil 21 is mounted on the inboard side end face of the outer member 18 oppositely to the magnetostrictive element 20. The magnetostrictive element 20 extends to increase the preload when the magnetic field is applied to the magnetostrictive element 20 by the electromagnetic coil 21. Herein, the inner member 25 denotes the hub wheel 23, the securing member 26, the nut 27, the inner ring 6 and the magnetostrictive element 20.

### Fourth embodiment

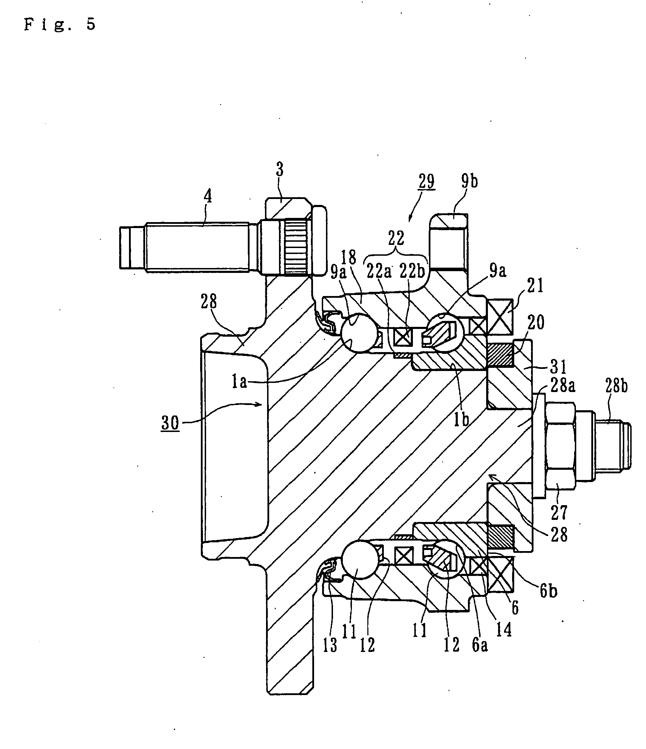

Fig. 5 is a longitudinal view showing a fourth embodiment of the bearing apparatus for a wheel of the present invention. This embodiment is a modification of the third embodiment and thus same reference numerals are used in this embodiment for designating same parts having same functions used in the third embodiment.

This bearing apparatus for a wheel of vehicle comprises a hub wheel 28 and a double row rolling bearing 29 and this double row rolling bearing 29 comprises the outer member 18, an inner member 30 and the double row rolling elements 11 and 11. The hub wheel 28 has the axially extending portion extending from the inner raceway surface 1a and a shaft portion 28a on which a male thread 28b is formed. The separate inner ring 6 is press fitted onto the axially extending portion 1b of the hub wheel 28 and immovably secured relative to the hub wheel 28 by the fastening nut 27 via a ring shaped securing member 31.

A ring shaped magnetostrictive element 20 is interposed between the end 6b of larger diameter of the inner ring 6 and the securing member 31. On the contrary, the electromagnetic coil 21 is mounted on the inboard side end face of the outer member 18 oppositely to the magnetostrictive element 20. The magnetostrictive element 20 extends to increase the preload when the magnetic field is applied to the magnetostrictive element 20 by the electromagnetic coil 21. Herein, the inner member 30 denotes the hub wheel 28, the securing member 31, the nut 27, the inner ring 6 and the magnetostrictive element 20.

### Fifth embodiment

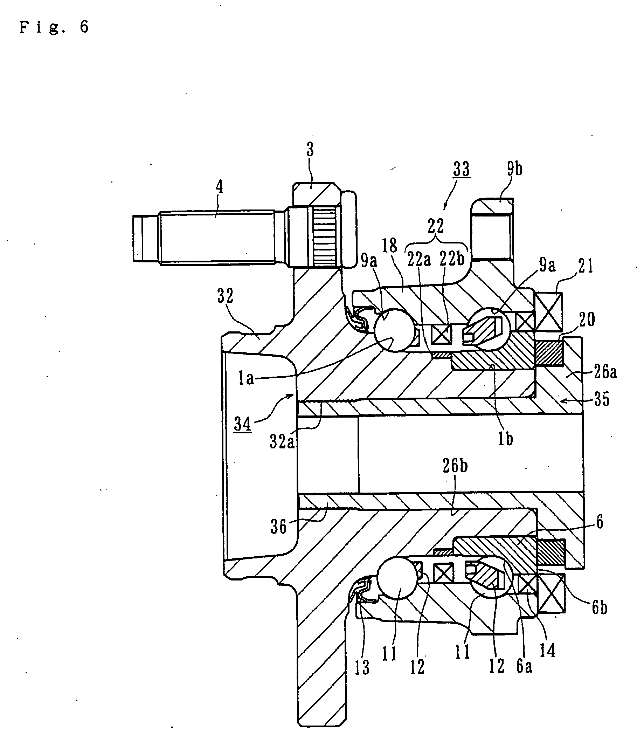

Fig. 6 is a longitudinal view showing a fifth embodiment of the bearing apparatus for a wheel of the present invention. Same reference numerals are used in this embodiment for designating same parts having same functions used in the third embodiment (Fig. 4) since this embodiment is modification of the third embodiment and different from the third embodiment only in a manner of securing the securing member.

This bearing apparatus for a wheel of vehicle comprises a hub wheel 32 and a double row rolling bearing 33 and this double row rolling bearing 33 comprises the outer member 18, an inner member 34 and the double row rolling elements 11 and 11. The hub wheel 32 is formed as having a hollow structure and a securing member 35 is inserted into a central bore of the hub wheel 32. The securing member 35 has a hollow structure and is formed with the flange portion 26a, the shaft portion 26b, and a fitting portion 36 at an end of the shaft portion 26b. A ring shaped magnetostrictive element 20 is interposed between the end 6b of larger diameter of the inner ring 6 and the flange portion 26a.

An irregular portion 32a is formed on the inner peripheral surface of the hub wheel 32 and a hardened layer having a surface hardness 54-64 HRC is formed thereon. The heat treatment is preferably carried out by high frequency induction hardening suitable for a local heating and for easily setting a depth of the hardened layer. The irregular portion 32a may be formed as having a knurled crisscross pattern.

The hub wheel 32 and the securing member 35 are integrally united by expanding and plastically deforming the fitting portion 36 using a suitable means such as a mandrel so that the irregular portion 32a of the hub wheel 32 bites into material of the fitting portion 36 of the securing member 35. Thus the inner ring 6 is axially immovably secured relative to the hub wheel 32. The fitting portion 36 is remained as non-hardened portion less than 24 HRC and it is preferable to set the difference of surface hardness between the fitting portion 36 and the irregular portion 32a more than 30 HRC. This enables the irregular portion 32a to easily and deeply bite into the fitting portion 36 and also to plastically unite them without causing deformation of tips of the irregular portion 32a. Herein, the inner member 34 denotes the hub wheel 32, the securing member 35, the inner ring 6 and the magnetostrictive element 20.

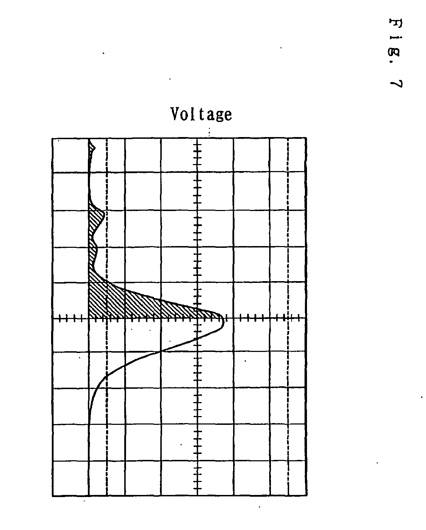

Then the preload controlling method during assembly of the bearing apparatus for a wheel of vehicle of the present invention will be described with reference to the embodiment of Fig. 1.
In assembly of the bearing apparatus, an output signal from the electrostrictive element 15 during fixation of the inner ring 6 relative to the hub wheel by the caulked portion 5 has a wave configuration shown in Fig. 7. In this wave configuration, a left hand portion with respect to the peak value (a hatched portion in Fig. 7) shows a plus portion in the preload variation and a right hand portion shows a discharge of electric charge in the electrostrictive element 15. Since an integral value of the left hand portion corresponds to the preload, it is possible exactly set the suitable initial preload by controlling its integral amount. Thus, since the assembly of the bearing apparatus can be carried out with watching the output signal from the electrostrictive element 15 forming the preload varying means, it is possible to complete the assembling work at a time in which the predetermined preload is obtained and also possible to more exactly and easily control the preload than the conventional torque control manner.

Similar preload control can be carried out in the case of using the magnetostrictive element 20 in the second embodiment (Fig. 2). In this magnetostrictive element 20, it is possible to easily detect the variation of the preload as a variation of the magnetic permeability, i.e. as a voltage variation exhibiting a linear relation in the magnetic coil 21. Accordingly, since the assembling work can be carried out, similarly to the case of the electrostrictive element 15, with watching the output signal from the magnetostrictive element 20, the preload control can be exactly and easily carried out.

### Applicability in industry

The bearing apparatus for a wheel of vehicle of the present invention can be applied to any kind of structure in which a predetermined preload is adapted to be applied to the double row rolling bearing.

The present invention has been described with reference to the preferred embodiments. Obviously, modifications and alternations, within the scope of the attached claims, will occur to those of ordinary skill in the art upon reading and understanding the preceding detailed description.

## Claims

1. A bearing apparatus for a wheel of vehicle, said bearing apparatus comprising a hub wheel (1, 23, 28, 32) integrally formed therewith a wheel mounting flange (3) on the periphery at one end thereof, and a double row rolling bearing (2, 17, 24, 29, 33), the double row rolling bearing comprising an outer member (7, 18) integrally formed therewith a body mounting flange (9b) on the periphery thereof and also formed therewith double row outer raceway surfaces (9a, 10a), an inner member (8, 19, 25, 30, 34) including said hub wheel (1, 23, 28, 32) and formed therewith double row inner raceway surfaces (1a, 6a) each arranged opposite to each of said double row outer surfaces, and double row rolling elements (11) freely rotatably contained between said double row outer and second raceway surfaces, said double row rolling bearing (2, 17, 24, 29, 33) being adapted to have applied a predetermined preload, wherein :
there are arranged a separate outer or inner ring on at least one of said outer and inner member, and a preload varying means (15, 20) arranged at an abutting portion between said outer member (7, 18) and the separate outer ring (10) or between said inner member (8, 19, 25, 30, 34) and the separate inner ring, (6) for varying the preload applied to the bearing, wherein said preload varying means (15, 20) can be extended or contracted based on an output signal from a detecting sensor for detecting the running condition of vehicle.

2. A bearing apparatus for a wheel of vehicle of claim 1 wherein the preload varying means comprises an electrostrictive element (15).

3. A bearing apparatus for a wheel of vehicle of claim 1 wherein the preload varying means comprises a magnetostrictive element (20).

4. A bearing apparatus for a wheel of vehicle of claim 1 wherein the preload varying means comprises a shape memory element.

5. A bearing apparatus for a wheel of vehicle of claim 1 wherein the preload varying means is made of a member having a coefficient of thermal expansion higher than that of structural parts of the bearing.

6. A bearing apparatus for a wheel of vehicle of any one of claims 1 through 5 wherein at least one of a load sensor, a vehicle speed sensor and a temperature sensor is incorporated in the preload varying means.

7. A bearing apparatus for a wheel of vehicle of any one of claims 1 through 6 wherein a temperature sensor is arranged within the double row rolling bearing (2, 17, 24, 29, 33), and the application of voltage is switched off to stop the preload varying function when the output signal from the temperature sensor exceeds a predetermined threshold level.

## Patentansprüche

1. Lagervorrichtung für ein Fahrzeugrad, die Lagervorrichtung umfassend ein Nabenrad (1, 23, 28, 32), an dem am Umfang an einem Ende davon ein Radanbringungsflansch (3) einstückig ausgebildet ist, und ein zweireihiges Wälzlager (2, 17, 24, 29, 33), wobei das zweireihige Wälzlager ein äußeres Glied (7, 18), an dem am Umfang davon ein Körperanbringungsflansch (9b) einstückig ausgebildet ist, und zweireihige äußere Laufringflächen (9a, 10a) umfasst, die außerdem daran ausgebildet sind, ein inneres Glied (8, 19, 25, 30, 34), das das Nabenrad (1, 23, 29, 32) enthält und an dem zweireihige innere Laufringflächen (1a, 6a) ausgebildet sind, die jede gegenüber jeder der zweireihigen äußeren Flächen angeordnet sind, und zweireihige Rollelemente (11), die frei rollbar zwischen den zweireihigen äußeren und zweiten Laufringflächen enthalten sind, wobei das zweireihige Wälzlager (2, 17, 24, 29, 33) dazu geeignet ist, eine vorgegebene Vorbelastung aufzuweisen, die darauf ausgeübt ist, **dadurch gekennzeichnet, dass** ein separater äußerer oder innerer Ring an zumindest einem des äußeren und inneren Glieds angeordnet ist und ein Vorbelastungsänderungsmittel (15, 20) an einem angrenzenden Abschnitt zwischen dem äußeren Glied (7, 18) und dem separaten äußeren Ring (10) oder zwischen dem inneren Glied (8, 19, 25, 30, 34) und dem separaten inneren Ring (6) zum Ändern der Vorbelastung, die auf das Lager ausgeübt ist, angeordnet ist, wobei das Vorbelastungsänderungsmittel (15, 20) auf Grundlage eines Ausgangssignals von einem Erkennungssensor zum Erkennen der Fahrbedingung des Fahrzeugs ausgestreckt oder zusammengezogen sein kann.

2. Lagervorrichtung für ein Fahrzeugrad nach Anspruch 1, wobei das Vorbelastungsänderungsmittel ein elektrostriktives Element (15) umfasst.

3. Lagervorrichtung für ein Fahrzeugrad nach Anspruch 1, wobei das Vorbelastungsänderungsmittel ein magnetostriktives Element (20) umfasst.

4. Lagervorrichtung für ein Fahrzeugrad nach Anspruch 1, wobei das Vorbelastungsänderungsmittel ein Formgedächtniselement umfasst.

5. Lagervorrichtung für ein Fahrzeugrad nach Anspruch 1, wobei das Vorbelastungsänderungsmittel aus einem Glied hergestellt ist, das einen Wärmeausdehnungskoeffizienten aufweist, der höher als jener von Bauteilen des Lagers ist.

6. Lagervorrichtung für ein Fahrzeugrad nach einem der Ansprüche 1 bis 5, wobei zumindest eines von einem Belastungssensor, einem Fahrzeuggeschwindigkeitssensor und einem Temperatursensor in dem Vorbelastungsänderungsmittel eingegliedert ist.

7. Lagervorrichtung für ein Fahrzeugrad nach einem der Ansprüche 1 bis 6, wobei ein Temperatursensor innerhalb des zweireihigen Wälzlagers (2, 17, 24, 29, 33) angeordnet ist, und die Spannungszufuhr zum Anhalten der Vorbelastungsänderungsfunktion ausgeschaltet ist, wenn das Ausgangssignal von dem Temperatursensor einen vorgegebenen Schwellenwert übersteigt.

## Revendications

1. Appareil porteur pour une roue de véhicule, ledit appareil porteur comprenant un moyeu (1, 23, 28, 32), formée sur celui-ci, une bride de montage de roue (3) sur la périphérie d'une extrémité de celui-ci, et un roulement à billes double (2, 17, 24, 29, 33), le roulement à billes double comprenant un élément extérieur (7, 18), formée sur celui-ci, une bride de montage de corps (9b) sur la périphérie de celui-ci, et également formée sur celui-ci, des surfaces externe de roulement (9a, 10a), un élément interne (8, 19, 25, 30, 34) comprenant ledit moyeu (1, 23, 28, 32) et formées sur celui-ci, les surfaces internes de roulement (1a, 6a), chacune agencée en opposition de chacune desdites surfaces externes, et des éléments de roulement double (11), pouvant librement entrer en rotation entre lesdites surfaces de roulement externes et internes, ledit roulement à billes double (2, 17, 24, 29, 33) étant approprié pour supporter une charge prédéterminée, où un anneau externe ou interne séparé est présent sur au moins l'un des éléments externe et interne, et des moyens de variation de la charge (15, 20) sont présents sur une partie appuyée entre ledit élément externe (7, 18) et l'anneau externe séparé (10) ou entre ledit élément interne (8, 19, 25, 30, 34) et ledit anneau interne séparé (6) pour varier la charge appliquée sur le porteur, où les moyens de variation de la charge (15, 20) peuvent être étendus ou contractés sur base d'un signal de sortie depuis un capteur de détection des conditions de roulement du véhicule.

2. Appareil porteur pour une roue de véhicule selon la revendication 1, où les moyens de variation de la charge comprennent un élément électrostrictif (15).

3. Appareil porteur pour une roue de véhicule selon la revendication 1, où les moyens de variation de la charge comprennent un élément magnétostrictif (20).

4. Appareil porteur pour une roue de véhicule selon la revendication 1, où les moyens de variation de la charge comprennent un élément à mémoire de forme.

5. Appareil porteur pour une roue de véhicule selon la revendication 1, où les moyens de variation de la charge sont constitués d'un élément ayant un coefficient de dilatation thermique supérieur à celui des parties structurelles du porteur.

6. Appareil porteur pour une roue de véhicule selon l'une quelconque des revendications 1 à 5, où au moins un parmi un capteur de charge, un capteur de la vitesse du véhicule et un capteur de température est incorporé dans les moyens de variation de la charge.

7. Appareil porteur pour une roue de véhicule selon l'une quelconque des revendications 1 à 6, où un capteur de température est agencé dans le roulement à billes double (2, 17, 24, 29, 33) et l'application d'une tension est éteinte pour arrêter la fonction de variation de charge lorsque le signal de sortie du capteur de température dépasse une valeur seuil prédéterminée.
